# EUROPEAN PATENT APPLICATION

(11) **EP 0 817 014 A2**
(43) Date of publication of application: **07.01.1998**
(21) Application number: 97401535.6
(22) Date of filing: 01.07.1997
(51) Int. Cl.: G06F 9/445

(54) **Software distribution medium and method of producing the medium**

(30) Priority: 04.07.1996 JP 175191/96
(71) Applicant: Pie Corp., Tokyo (JP)
(72) Inventor: Yada, Koji, Musashino-shi, Tokyo (JP)
(74) Representative: Plaçais, Jean-Yves

(57) **Abstract**

With the software distribution medium of the present invention, it is possible to execute any application program without requiring excessive storage resources, and to simply construct an execution environment specific to a user.

The software distribution medium 40 is used being loaded into a medium driving unit 14 of a software execution device comprising a computer 10, a display 20, input device 30, etc., and comprises a magneto-optical disk (MO) etc. In the storage area of the software distribution medium 40, there are stored an operating system 41 controlling operations of the computer 10, one or a plurality of any application programs 42 operating upon this operating system 41, and further a software such as a boot program etc. The functions of the operating system 41 are limited to necessary and minimum ones required for execution of the application program(s) 42 commonly stored, thus waste of the storage resources such as a main memory of the computer 10 can be avoided.

## Description

### BACKGROUND OF THE INVENTION

### Field of the Invention

The present invention relates generally to a software distribution medium and a technique for producing it, and more particularly to a technique effectively applicable to constructing a relatively simple information terminal, treating various information, and proper control of duplication and installation of a software.

### Related Art Statement

As described in such a document as "Saishin Pasokon Gijutsu Taikei (Outline of the Latest Personal Computer Technique)", "Nikkei Byte", Separate Volume No. 2, Nikkei BP Company, June 21, 1994, pp. 187-386, for example, usually in an information terminal such as a personal computer, it is general practice that a general-purpose operating system (OS) and any application program are stored in a fixed storage such as a magnetic disk built in a main body, and that the application program is executed under the control of the OS which is loaded to be resident at the time of booting.

On the other hand, there are distributed softwares such as a role-playing game in which a user plays by setting and/or changing game unfolding. However, in the case that such a software is distributed being stored in a read only memory (medium) such as a usual CD-ROM or a mask ROM, a part changed by a user can not be saved. For this reason, such a software is distributed accompanying a rewritable medium such as an IC card separated from the read-only medium containing that software.

Further, a lower price of a fixed disk device such as a magnetic disk has made it usual that even a personal computer etc. has such a fixed disk built-in. On the other hand, as regards application programs on the market, their program sizes go on increasing for accommodation to GUI (graphical user interface) etc. Accordingly, in the distribution using a small storage medium such as a floppy disk, the number of the medium used is increased unduly, making things complicated. Therefore, it is general that an application program is distributed using a read-only mass storage medium such as a CD-ROM which has been spreading recently.

In a personal computer provided with a fixed disk device, a large-sized general-purpose OS having all functions prepared for executing various application programs is stored in said fixed disk, and loaded to a main memory, while an application program is executed upon this large-sized OS. Therefore, there is a technical problem that the resources such as the fixed disk and the main memory are consumed excessively by the resident OS, and that the resources assigned to the application program is reduced relatively. Further, when such a fixed disk device is used, execution environment for softwares is specialized in accordance with a taste or business of certain user. Therefore, for a plurality of users, the same number of personal computers are required even if they are not used at all times, and thus, there is also a technical problem that waste of the resources such as the personal computers etc. becomes large.

Further, to construct the same environments both at home and at office, contents of fixed disk devices of personal computers provided in the two places, the home and the office, must be kept in the same conditions. Thus, there is also a technical problem that much labor is required for maintaining and managing the environments.

Further, when a simple read-only storage medium is used as a distribution medium of a software such as a game software etc., it is needed to attach a rewritable medium separately for saving execution results etc.. Thus, there is a technical problem that management and distribution work of a software become troublesome, and further hardware configuration becomes complicated.

Further, in a license contract directed to an individual user etc. of a application program on the market, it is generally obliged that one application program should be purchased for each execution device. In that case, it is necessary to record identification information of the execution device which has obtained through an installation process in order to prevent an illegitimate operation of multiple copying of the application program into a plurality of devices. For that purpose, when a read-only storage medium such as a CD-ROM is used for distribution, it is necessary to attach a rewritable medium such as a floppy disk for recording an installation process, and thus, control and use on both supply and user sides of the application program become troublesome, which is another technical problem.

### SUMMARY OF THE INVENTION

An object of the present invention is to provide a software distribution medium which makes it possible to execute any application program without excessively requiring storage resources.

Another object of the present invention is to provide a software distribution medium which allows common use of a software execution device by a plurality of businesses or users, thus improving availability of the software execution device.

Another object of the present invention is to provide a software distribution medium which allows to easily construct a software execution environment for a specific user in any software execution device.

Another object of the present invention is to provide a software distribution medium which allows to construct various execution environment or working environment for an application program or software without requiring another medium.

Further object of the present invention is to provide a software distribution medium which allows proper management of licenses of an application program or software without requiring another medium.

A software distribution medium according to the present invention is one storing an operating system which controls a software execution device and any one or more application programs which operate upon the operating system.

The software distribution medium may comprise a read-only ROM area in which the operating system and the application programs are stored, and a rewritable RAM area in which at least one of control information and any data accessed by the operating system and the application programs is stored, the control information being used for controlling an operation of at least one of the operating system and the application programs.

The operating system stored in the software distribution medium of the present invention may include necessary and minimum functions required for executing the application programs.

Further, the software distribution medium may be so constructed that the operating system consists of plural kinds of operating systems adapted for plural kinds of software execution devices respectively, and it is made possible to selectively use one of said operating systems adapted for a software execution device in question when said software distribution medium is loaded into said software execution device to boot.

Further, another software distribution medium according to the present invention is one comprising a ROM area storing any first information in a read-only manner and a RAM area storing, in a rewritable manner, second information for controlling the first information. In this software distribution medium, the first information comprises at least one of video information and audio information, and the second information comprises information for editing said first information.

Further, another software distribution medium according to the present invention comprises a ROM area storing any software in a read-only manner and a RAM area storing, in a rewritable manner, security information for preventing an illegal behavior in an operation of installing or duplicating said software into any other medium.

Further, the method of producing a software distribution medium according to the present invention is one which carries out steps of: selecting any one or more application programs to be stored in the software distribution medium; deciding, in any operating system, necessary and minimum functions required for executing said application programs; constructing said operating system including the necessary and minimum functions; and storing the operating system together with said application programs in the software distribution medium.

Other features and advantages of the present invention will become readily apparent from the following description and drawings.

### BRIEF DESCRIPTION OF THE DRAWINGS

In the following, preferred embodiments of the present invention will be described in detail referring to the accompanying drawings, wherein:
Fig. 1 is a conceptual view showing a software distribution medium as the first embodiment of the present invention and an example of configuration of a software execution device utilizing that software distribution medium;
Fig. 2 is a conceptual view showing, in more detail, the example of the configuration of the software execution device utilizing the software distribution medium of the first embodiment;
Fig. 3 is a flowchart showing an example of a production method of the software distribution medium of the first embodiment;
Fig. 4 is a conceptual view showing an example of construction of a software distribution medium as the second embodiment of the present invention;
Fig. 5 is a flowchart showing an example of a using method of the software distribution medium of the second embodiment;
Fig. 6 is a conceptual view showing an example of construction of a software distribution medium as the third embodiment of the present invention;
Fig. 7 is a flowchart showing an example of operation of the software distribution medium of the third embodiment;
Fig. 8 is a conceptual view showing an example of construction of a software distribution medium as the fourth embodiment of the present invention; and
Fig. 9 is a flowchart showing an example of operation of the software distribution medium of the fourth embodiment.

### DETAILED DESCRIPTION OF THE INVENTION

Now, embodiments of the present invention are described in detail referring to the drawings.

### [Embodiment 1]

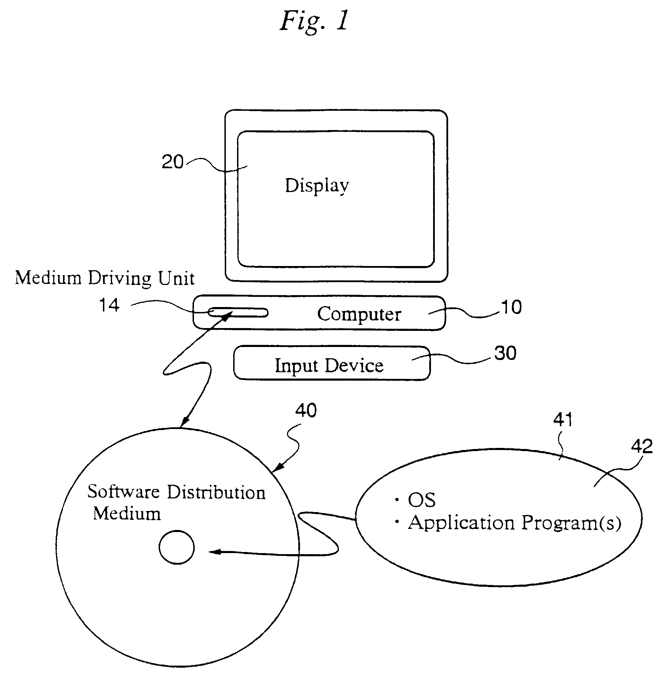

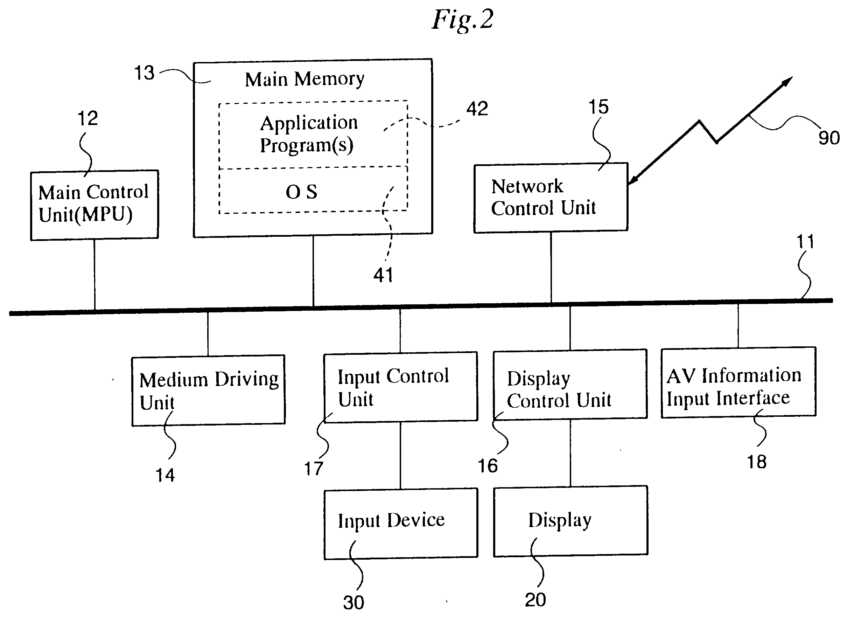

Fig. 1 is a conceptual view showing a software distribution medium as the first embodiment of the present invention and an example of configuration of a software execution device utilizing that software distribution medium, and Fig. 2 is a conceptual view showing, in more detail, that example of the configuration.

The software execution device of the present embodiment comprises a computer 10, a display 20 connected to the computer 10, and an input device 30. As the display 20, there can be used an ordinary television display, a monitor for a personal computer provided with an interface such as VGA, or the like. As the input device 30, there can be used any suitable device such as an ordinary keyboard, a pointing device such as a mouse, a scratch pad, or the like.

As shown in Fig. 2, the computer 10 is so constructed that, to a system bus 11, there are connected a main control unit 12 such as MPU or the like, a main memory 13 for storing a basic software (OS), which controls the main control unit 12, and any application program, a medium driving unit 14 for removably loading a software distribution medium as described below, a display control unit 16 controlling information output to the display 20, an input control unit 17 connected with the input device 30, etc. Further, although not shown, a read-only memory is connected to the system bus 11, in which there is stored a program for executing a boot process of the computer 10 at the time of power-up or reset.

Further, if required, there may be provided a network control unit 15 which controls sending and receiving of information to and from an outside information network (not shown) such as the Internet. Also, an AV information input and output interface 18 may be provided for connecting an input or output device for AV information such as video or voice information.

In the present embodiment, the software distribution medium 40 consists of a magneto-optical disk (MO) etc., and, in its storage area, there are stored an operating system (OS) 41 as a basic software controlling operations of the computer 10, one or more of any application programs 42 operating upon the OS 41, and further a software such as a boot loader for loading the OS 41 into the main memory 13 on the occasion of loading of the software distribution medium 40 in question onto the medium driving unit 14.

In this case, the OS 41 stored in the software distribution medium 40 is limited in its function to the necessary and minimum one required for executing the application programs 42 stored together.

Namely, when different application program or programs 42 are to be stored together with the OS 41, the OS 41 is so selectively provided with functions required for executing an application program or programs 42 for each kind of individual application program 42 or for each combination of a plurality of application programs 42 that OS 41 is constructed to be minimum in size. As the OS 41, there may be used one distributed license-free or as a shareware with very cheap license charge per piece, with its source code being publicized, such as the LINUX.

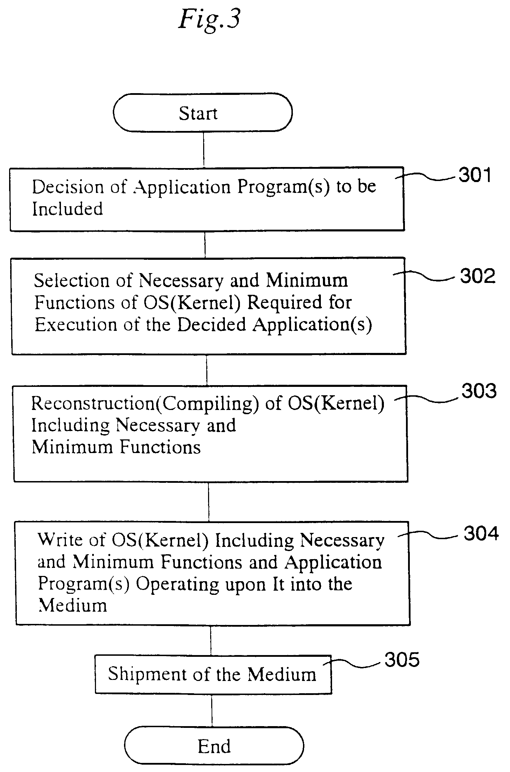

Fig. 3 is a flowchart showing an example of a production method of such a software distribution medium 40.

First, an application program or programs 42 to be included in the software distribution medium are decided (Step 301).

Then, functions of the OS 41 required for executing the decided application program(s) 42 are decided (Step 302) . For example, when the application program 42 is a software which does not access a network, a driver for driving the network control unit 15 maybe deleted, and, when the AV information input and output interface 18 is not required, a driver for driving the AV information input and output interface 18 maybe deleted so that the OS 41 can be made as small as possible in size.

Thereafter, the OS 41 is reconstructed to include minimum functions selected in Step 302 (Step 303) .

Then, the application program(s) 42 and the small-sized OS 41 provided with the minimum functions required for executing the application program(s) 42, together with a necessary boot program etc., are written into the software distribution medium 40 (Step 304), and that software distribution medium is released (Step 305).

When, a magneto-optical disk (MO) or the like in which any storage area can be set read-only, a storage area of the OS 41 and/or application program(s) 42 not to be changed can be set as read-only after writing, while the remained area is a rewritable RAM area to be assigned for storage of ordinary data, so that those softwares can be prevented from being corrupted because of a wrong operation.

Thus, there are produced just enough kinds of software distribution media 40 dedicated for execution of the respective kinds of the application programs 42 and/or the respective combinations of the application programs 42. In that case, if, as the OS 41, a cheap or free operating system distributed as a shareware or freeware is employed, it is possible to construct execution environments for various application programs 42 with very lower cost, in comparison with the case that there is employed a general-purpose operation system sold on the market with higher price and under many limitations imposed by license.

Thus-produced software distribution medium 40 is carried by a user with him, loaded into the medium driving unit 14 of the computer 10. By the boot-strap operation started on the occasion of this loading, the OS 41 within the software distribution medium 40 is loaded into the main memory 13. Under the control of the loaded OS 41, the application program 42 is loaded into the main memory 13, and its execution is started. Data files etc. produced during the execution are saved in an unoccupied area of the software distribution medium 40. For example, when MO is used as the software distribution medium 40, more than 640 M byte can be available even at present, and therefore a sufficient unoccupied area can be secured even after taking away the storage area for the OS 41 and the application programs 42.

As the application program(s) 42, there can be listed, for example, a combination of a Web browser for accessing a WWW on the Internet and a WWW server, any word processing software, an audio/visual editing software, a game software, and the like.

As described above, according to the software distribution medium 40 of the present embodiment, the medium contains an application program(s) 42, a small-sized operating system having necessary and minimum functions for executing the application program(s) 42, and a general-purpose operating system etc. is not required at the time of execution. Therefore, resources such as the main memory 13 etc. occupied by the OS 41 is minimum, and accordingly resources available to the application program(s) 42 are increased.

Further, the software distribution medium 40 is portable, and therefore, for example, by providing computers 10 (software execution devices) both at user's home and at user's office, and by carrying, at all times with himself, the software distribution medium to be used for himself, the user can construct the same software execution environments easily both at home and at office as well as at any location where a computer 10 is provided.

Further, in a company etc. where a plurality of users exist, relatively small number of computers 10 maybe prepared, and each time when it is necessary to use a computer 10, a user loads his private software distribution medium 40 into the computer 10 to boot it. Therefore, it is not necessary to prepare many computers 10 for respective users, and the availability of the computers 10 is improved.

Further, since the OS 41 is cheap, a large number of software distribution media can be prepared at a low price for each application program 42 or for each group of application programs 42 used for specific business. When, as an application program 42, a cheap one being distributed as the so-called shareware or freeware is used, the price of the software distribution medium 40 can be made further cheaper.

### [Embodiment 2]

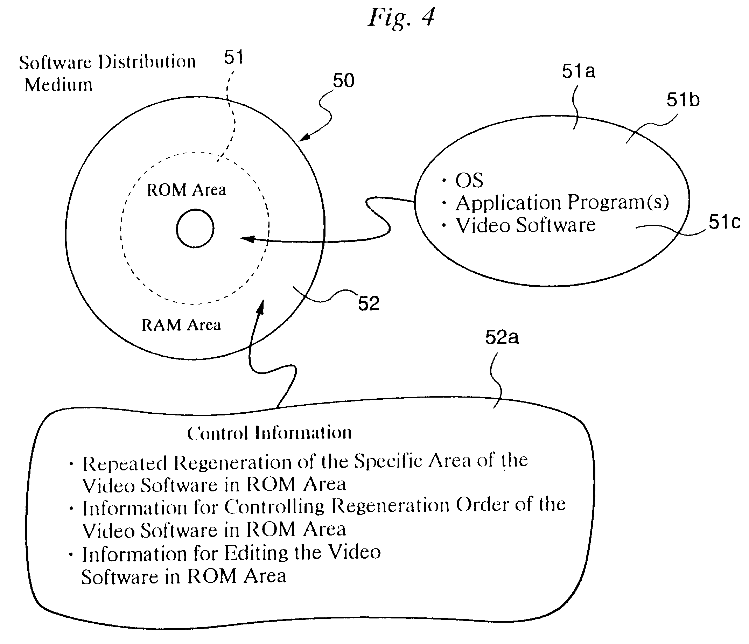

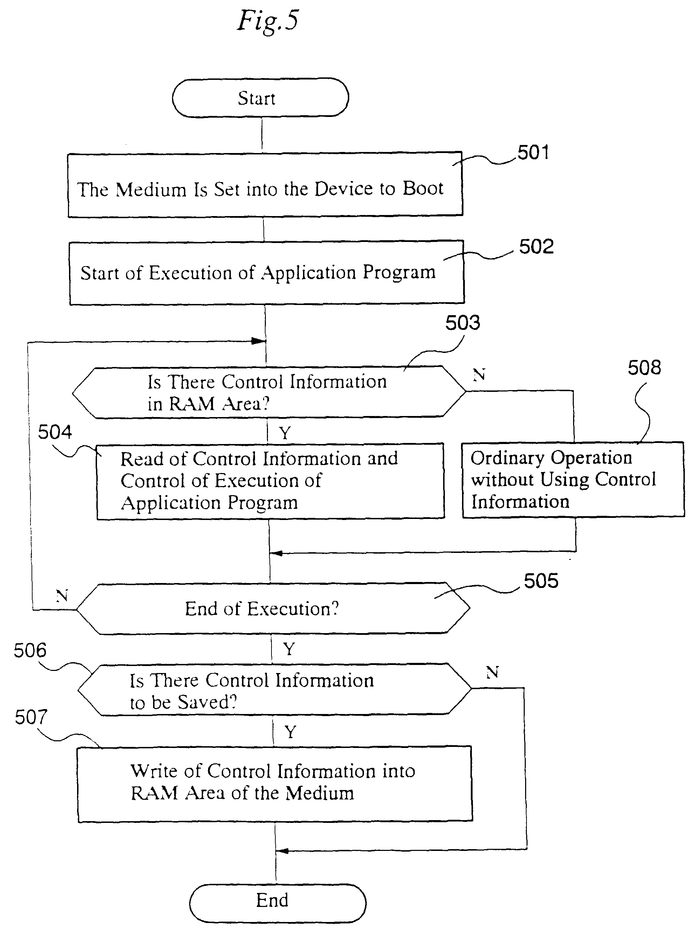

Fig. 4 is a conceptual view showing an example of construction of a software distribution medium 50 as the second embodiment of the present invention, and Fig. 5 is a flowchart showing an example of a using method thereof.

The software distribution medium 50 is divided into a read-only ROM area 51 and a rewritable RAM area 52. For example, in the ROM area, there is stored an operating system (OS) 51a, an application program 51b operating upon the OS 51a, a video software 51c to be regenerated by the application program 51b, etc., and in the RAM area, there is stored control information 52a for controlling regeneration operations etc. of the video software 51c.

For example, in the case that the video software 51c is a movie or the like, and it is desired to regenerate and to see a specific scene of the movie repeatedly, information on a storage location of the specific scene in question in the ROM area 51 and code information indicating repeated regeneration maybe stored in advance. At the time of regeneration, the application program 51b may automatically carry out the operations for regenerating the specific scene of the video software 51c repeatedly on the basis of these pieces of control information.

In the case that the video software 51c is an educational software, for example, the following procedures may be employed. Namely, a teacher may set the control information 52a in the RAM area 52 in advance, the control information 52 being combinations of objects such as a large number of teaching materials included in the video software 51c in question and methods of presentation. A corresponding application program 51b may read the control information 52a, combine the teaching materials according to the directions, and present the combinations to an learner.

Further, in the case that the video software 51c is shot data taken by a video camera or the like, information about which areas of the shot data should be combined to be regenerated and in what order is stored in the RAM area 52 as the control information 52a in advance. As a result, various editing operations are made possible without carrying out operations such as troublesome copying and editing of the shot data stored in the ROM area 51 as the video software 51c, namely without degrading image quality of the original shot data.

Further, as another use, only audio information such as a music software etc. may be stored as the video software 51c in the software distribution medium 50 in advance. That software distribution medium 50 may be loaded into a portable computer 10 so that the audio information may be regenerated for enjoyment.

An example of a method of setting such control information 52a as described above in the RAM area 52 is described referring to the flowchart of Fig. 5.

First, a software execution device is loaded with the software distribution medium 50 and booted (Step 501), and then execution of the application program 51b is started (Step 502) . Then, at first, it is examined if certain control information 52a exists in the RAM area 52 or not (Step 503) . If there is control information 52a, that control information 52a is read, and regeneration/execution of the video software 51c is carried out according to the above-described control operations (Step 504) . If there is not control information 52a in the RAM area 52, operations interactive with a user, for example, are carried out without using control information (Step 508) .

In the operation of Step 508, process that a user makes any control information 52a maybe carried out. In the case that the video software 51c is a role-playing game software, a result of playing expressed as a story etc. specific to a user is the control information 52a.

Then, the end of execution is judged (Step 505), and, when it is so, it is judged if control information 52a to be saved exists or not (Step 506) . If there exists the control information 52a, it is written into the RAM area 52 (Step 507), and the execution is ended.

Thus, in the software distribution medium 50 of the present embodiment, control information 52a is set in the RAM area, and thereby, various editing operations etc. can be carried out onto the video software 51c stored in the ROM area 51.

### [Embodiment 3]

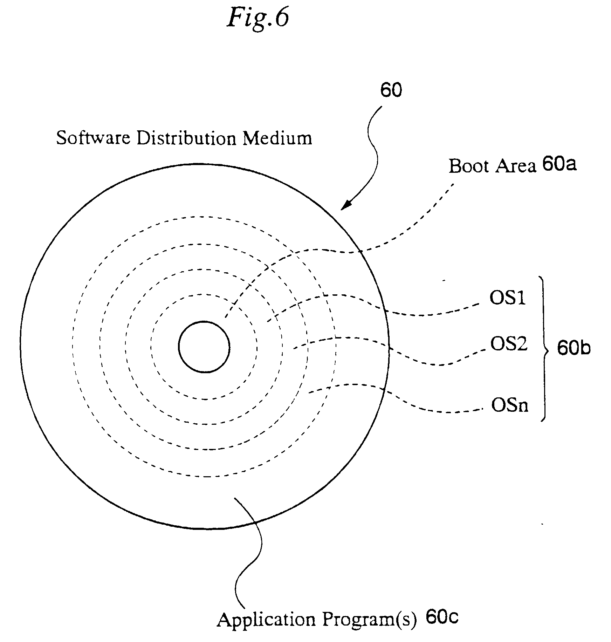

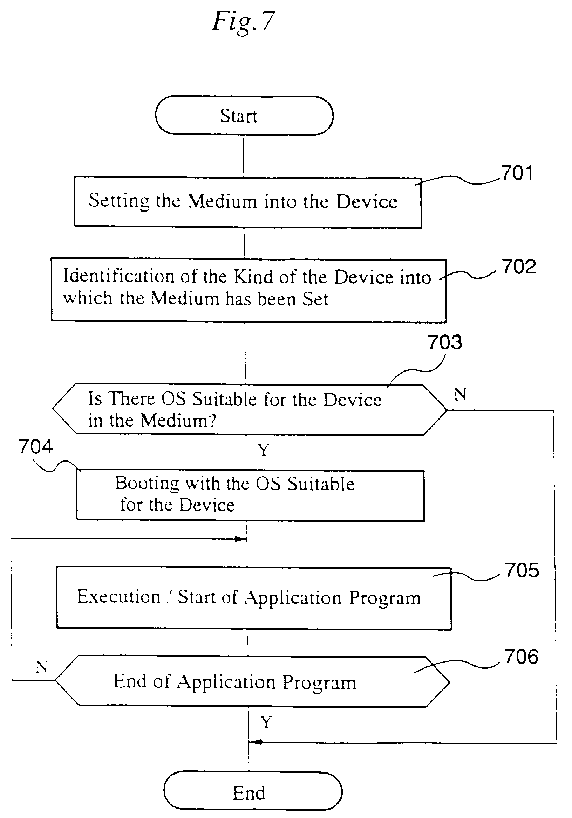

Fig. 6 is a conceptual view showing an example of construction of a software distribution medium as the third embodiment of the present invention, and Fig. 7 is a flowchart showing an example of operation thereof.

In the software distribution medium 60 of the present embodiment, in addition to a boot area 60a, there are areas in which stored a plurality of operating systems (OS1, OS2, ..., OSn) corresponding to different software execution devices respectively and an application program 60c operating upon these operating systems. At the time of booting, in accordance with a kind of a software execution device, a corresponding operation system 60b is started up.

Namely, as shown in the flowchart of Fig. 7, the software distribution medium 60 is set into a software execution device, and a boot process is started (Step 701). Then, at first, a kind of the software execution device in question, into which the software distribution medium 60 has been set, is recognized (Step 702) . Then, it is judged if an operating system suitable for the software execution device in question exists among the plurality of operating systems 60b stored in the software distribution medium 60 (Step 703) . If it exists, that operating system 60b is selected, and its boot process is started (Step 704) . Further, the application program 60c is started to operate upon this operating system 60b (Step 705), and then, it is monitored if the execution of the application program 60c is ended or not (Step 706).

Thus, in the present embodiment, a plurality of operating systems 60b adapted for plural kinds of software execution device respectively has been stored in the software distribution medium 60. An operating system 60b is selected so that it is suitable for a software execution device into which the software distribution medium 60 is loaded, and the booting process is started. Thereby, it is made possible that a piece of software distribution medium 60 can be commonly used for a plurality of different software execution devices, and availability of the software distribution medium 60 and further availability of the software execution device are improved.

### [Embodiment 4]

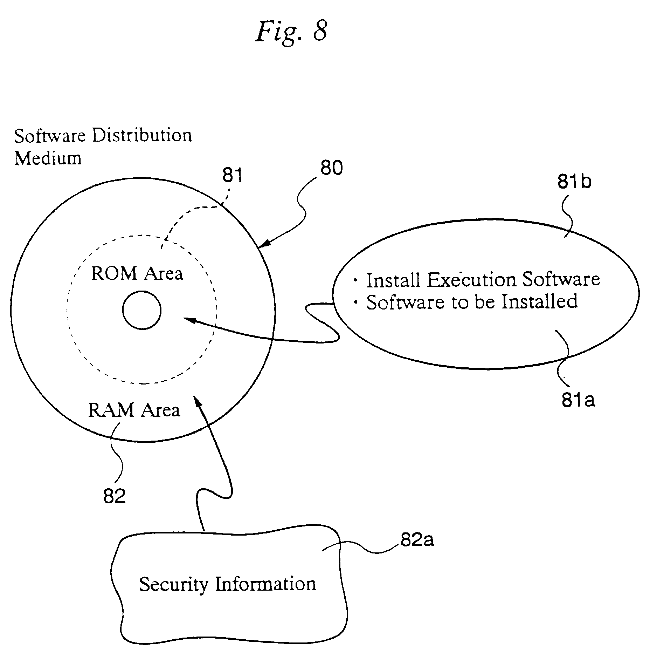

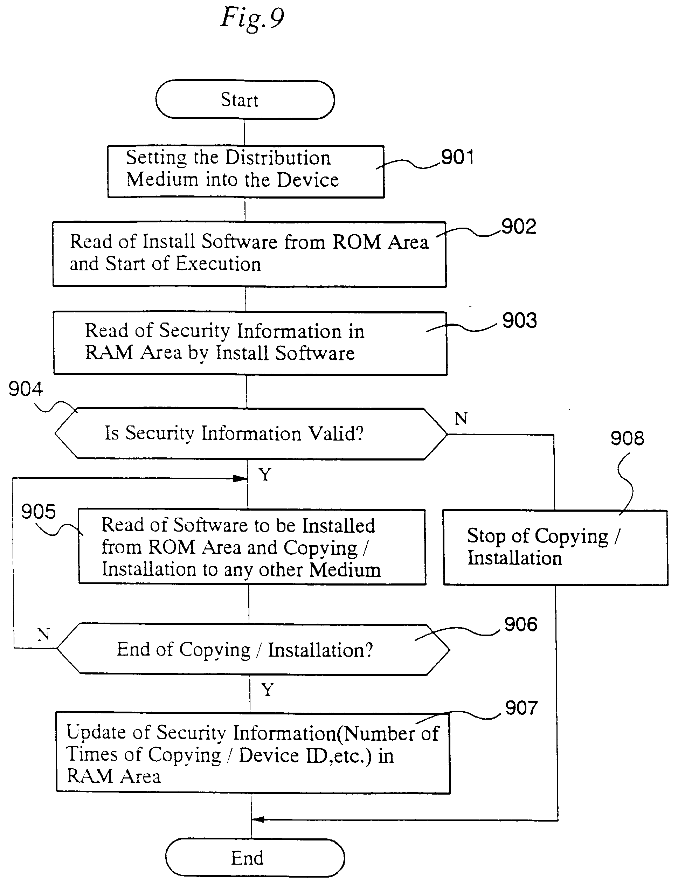

Fig. 8 is a conceptual view showing an example of construction of a software distribution medium as the fourth embodiment of the present invention, and Fig. 9 is a flowchart showing an example of operation thereof.

In the software distribution medium 80 of the present embodiment, a read-only ROM area 81 and a rewritable RAM area 82 are set. In the ROM area 81, there are stored a software to be installed 81a and a specific install software 81b for installing that software to be installed 81a. The software to be installed 81a comprises any application program etc. which should be protected under a given license contract. This ROM area 81 is made to have an attribute that it is rewritable only with a specific equipment at the provider of the software to be installed 81a, and it can not be rewritten by a medium driving unit 14 provided in an ordinary software execution device sold on the market.

On the other hand, into the RAM area 82 which is rewritable with the medium driving unit 14 provided in the ordinary software execution device sold on the market, there is written security information 82a for protecting the software to be installed 81a from illegal duplicating and installing operations. As the security information 82a, there may be listed, for example, the upper limit for a number of times of copying the software to be installed 81a onto other medium, information obtained by encrypting identification information specific to a certain software execution device to which the software to be installed 81a has been installed, and the like.

The security information 82a in the RAM area 82 of the software distribution medium 80 according to the present embodiment is used as follows, for example.

Namely, as shown in the flowchart of Fig. 9, the software distribution medium 80 is set into a software execution device to which the software 81a is to be installed (Step 901) . The install software 81b is read from the ROM area 81, and its execution is started (Step 902) . At this time, at first, the install software 81b read the security information 82a in the RAM area 82 (Step 903), and checks validity of the security information 82a (Step 904) .

At this time, if it is found from the security information 82a that an install operation was carried out already in other software execution device in the past, or that a number of times of installation (copying) exceeds the allowed number, it is judged as illegal and the installation is discontinued (Step 908) .

On the other hand, if the security information 82a is judged as right, the software to be installed 81a is read from the ROM area 81, and the install operation such as copy to another medium (not shown) provided in the software execution device is started (Step 905) . When this installation is ended (Step 906), the security information 82a related to the install operation of this time (for example, accumulated number of copying until this time, identification information specific to the software execution device on which installation is carried out this time, and the like) is encrypted for making alteration difficult, and written into the RAM area 82 (Step 907), thus preparing the next install operation.

As described, the software distribution medium 80 of the present embodiment is provided with the ROM area 81 and the RAM area 82. In the ROM area 81, the software to be installed 81a which is an object of protection is stored, and, in the RAM area 82, security information 82a can be written in a renewable manner for protecting the software to be installed 81a from an illegal install behavior. Therefore, it is not necessary to attach separate medium such as floppy disk for storing the security information 82a as in the case that the software to be installed 81a is distributed using a totally read-only medium such as CD-ROM, for example, and management of the software distribution medium 80 is simplified very much both for a supplier and for a user of the software to be installed 81a.

The invention of the present inventor has been described in detail referring to the embodiments of the invention. Of course, however, the present invention should not necessarily be limited to the above-described embodiments, and needless to say can be modified variously within the scope not departing from the technical gist.

For example, as the software distribution medium, the description has been made giving an example of a magneto-optical disk (MO) . However, the present invention includes use of a general portable storage medium if a ROM area and a RAM area can be set mixedly in one piece of the medium.

Further, the present invention includes a semiconductor memory card having a flash type EEPROM or a mask ROM as the ROM area, and having a DRAM as the RAM area.

According to the software distribution medium of the present invention, there is obtained such an effect that storage resources are not required excessively and execution of any application program is made possible.

According to the software distribution medium of the present invention, common use of a software execution device by a plurality of businesses or users make it possible to improve availability of the software execution device.

According to the software distribution medium of the present invention, it is possible to easily construct a software execution environment for a specific user in any software execution device.

According to the software distribution medium of the present invention, it is possible to construct various execution environment or working environment for an application program or software without requiring other medium.

According to the software distribution medium of the present invention, it is possible to properly carry out license management of an application program or software without requiring another medium.

## Claims

1. A software distribution medium storing an operating system which controls a software execution device and any one or more application programs which operate upon said operating system.

2. The software distribution medium according to Claim 1 wherein: said software distribution medium comprises a read-only ROM area in which said operating system and said application programs are stored, and a rewritable RAM area in which at least one of control information and any data accessed by the operating system and the application programs is stored, the control information being used for controlling an operation of at least one of said operating system and said application programs.

3. The software distribution medium according to Claim 1, wherein: said operating system includes necessary and minimum functions required for executing said application programs.

4. The software distribution medium according to Claim 2, wherein: said operating system includes necessary and minimum functions required for executing said application programs.

5. The software distribution medium according to Claim 1, wherein:
said operating system consists of plural kinds of operating systems adapted for plural kinds of said software execution devices respectively, and
it is made possible to selectively use one of said operating systems adapted for one of said software execution devices when said software distribution medium is loaded into said software execution device to boot.

6. A software distribution medium comprising a ROM area storing any first information in a read-only manner and a RAM area storing, in a rewritable manner, second information for controlling said first information.

7. The software distribution medium according to Claim 6, wherein: said first information comprises at least one of video information and audio information, and said second information comprises information for editing said first information.

8. A software distribution medium comprising a ROM area storing any software in a read-only manner and a RAM area storing, in a rewritable manner, security information for preventing an illegal behavior in an operation of installing or duplicating said software into any other medium.

9. A method of producing a software distribution medium comprising steps of:
selecting any one or more application programs to be stored in the software distribution medium;
deciding, in any operating system, necessary and minimum functions required for executing said application programs;
constructing said operating system including said necessary and minimum functions; and
storing said operating system together with said application programs in said software distribution medium.
